## Europäisches Patentamt

## European Patent Office

## Office européen des brevets

(19)

(11) **EP 1 275 961 A1**

(12) # DEMANDE DE BREVET EUROPEEN

(43) Date de publication:
**15.01.2003 Bulletin 2003/03**

(51) Int Cl.7: **G01N 30/74**

(21) Numéro de dépôt: **02290580.6**

(22) Date de dépôt: **08.03.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **11.07.2001 FR 0109202**

(71) Demandeurs:
- **Sedere S.A.**
  **94141 Alfortville Cedex (FR)**
- **Université d'Orleans**
  **45072 Orléans Cedex 02 (FR)**
- **Université Paris 11 - IUT d'Orsay**
  **91403 Orsay Cedex (FR)**

(72) Inventeurs:
- **Gangloff, Henry**
  **94220 Charenton le Pont (FR)**
- **Dreux, Michel**
  **45160 Olivet (FR)**
- **Tchapla, Alain**
  **91940 Les Ulis (FR)**
- **Heron, Sylvie**
  **91190 Gif sur Yvette (FR)**

(74) Mandataire: **Cabinet HERRBURGER**
  **115, Boulevard Haussmann**
  **75008 Paris (FR)**

(54) **Procédé de pilotage d'un détecteur évaporatif à diffusion de lumière**

(57) Procédé de pilotage d'un détecteur évaporatif à diffusion de lumière comportant :

- un nébuliseur associé à une chambre de nébulisation,
- une chambre d'évaporation, et
- une chambre de détection,

caractérisé en ce que
l'on règle au moins un paramètre influençant les conditions de nébulisation en amont de la chambre d'évaporation de l'aérosol de façon à fixer le coefficient de réponse b du détecteur évaporatif à diffusion de lumière à une valeur de réglage de nature à faciliter les analyses et / ou à augmenter leur précision et leur fiabilité. La pente b des droites d'étalonnage est déterminée par l'équation :

$$Log\ A = b\ Log m + Log a$$

dans lesquelles A représente la surface du signal mesurant l'intensité diffusée par l'un des composés à analyser et m la masse ou la concentration de ce composé dans l'échantillon.

Fig. 1

## Description

La présente invention a pour objet un procédé de pilotage d'un détecteur évaporatif à diffusion de lumière.

Un tel appareil qui est adapté à l'analyse d'effluents provenant notamment de colonnes de chromatographie a pour avantage d'être universel, c'est-à-dire de permettre l'analyse de tous les composés non volatils en particulier les cations et anions inorganiques ou organiques contenus dans un échantillon, ce sans préparation de cet échantillon ni traitement chimique particulier, sauf éventuellement la transformation de composés volatils en composés non volatils.

Le principe de fonctionnement d'un détecteur évaporatif à diffusion de lumière est le suivant : les composés à analyser sont transportés par une phase mobile ou un liquide porteur plus volatil qui est ensuite nébulisé puis évaporé à température relativement faible (pouvant être de l'ordre de 40°C) de sorte que seules demeurent des micro particules résiduelles - idéalement les composés à analyser - pouvant être détectées par diffusion de lumière.

On peut ainsi en particulier analyser directement des effluents provenant de colonnes de chromatographie, à la condition de choisir une phase mobile suffisamment volatile pour être directement utilisée en tant que liquide porteur au niveau du détecteur évaporatif à diffusion de lumière.

Les détecteurs évaporatifs à diffusion de lumière comportent par suite :

- un nébuliseur associé à une chambre de nébulisation et dans lequel on introduit d'une part un échantillon constitué par un liquide porteur renfermant des composés à analyser moins volatils qui ont été dissous dans celui-ci et d'autre part un gaz de nébulisation permettant de transformer l'échantillon en un aérosol,
- une chambre d'évaporation constituée par un tube chauffé dans laquelle on évapore le liquide porteur afin de ne conserver que des micro particules des composés à analyser, et
- une chambre de détection dans laquelle on irradie les micro particules résiduelles des composés à analyser par un rayonnement issu d'une source polychromatique ou monochromatique et on détecte la lumière diffusée dans une direction différente de celle du faisceau d'irradiation.

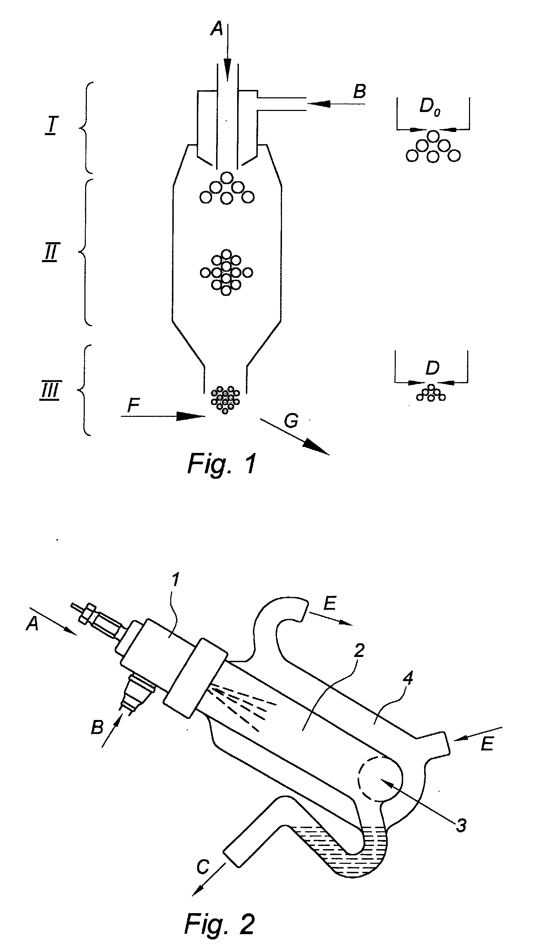

Un détecteur évaporatif à diffusion de lumière est à titre d'exemple représenté schématiquement sur la figure 1.

Selon cette figure, cet appareil est constitué par un ensemble I comportant un nébuliseur 1 associé à une chambre de nébulisation 2 représenté en détail sur la figure 2, par une chambre d'évaporation II et par une chambre de détection III.

Selon la figure 2, l'échantillon qui est constitué par un liquide porteur dans lequel sont dissous les composés à analyser est introduit dans le nébuliseur 1 par un tube d'introduction de faible diamètre selon la flèche A.

Au niveau de ce nébuliseur 1 l'échantillon est soumis à l'action d'un gaz de nébulisation introduit selon la flèche B de façon à obtenir dans la chambre de nébulisation 2 située directement en aval du nébuliseur 1, un aérosol constitué par des gouttelettes d'échantillon de diamètre $D_0$.

Plus précisément, le nébuliseur 1 est un nébuliseur concentrique de type Venturi dans lequel le gaz de nébulisation arrive tangentiellement par une buse concentrique de manière à envelopper coaxialement le flux d'échantillon à analyser.

Par suite la chambre de nébulisation 2 fait office de filtre pour permettre d'obtenir une répartition étroite des diamètres $D_0$ des gouttelettes d'aérosol : en effet, les plus grosses gouttelettes qui sont situées à l'extérieur du jet et sont plus lentes que les gouttelettes plus petites se trouvant à la partie médiane de celui-ci sont éliminées par condensation sur les parois de la chambre de nébulisation 2 puis évacuées selon la flèche C et éliminées à l'aide d'un siphon ; en conséquence la partie centrale du jet est pratiquement la seule à être transférée vers la chambre d'évaporation II par un orifice médian 3.

Selon la figure 2, la chambre de nébulisation 2 peut être placée dans une enceinte thermostatée 4 dans laquelle on peut faire circuler un fluide caloporteur selon les flèches E de façon à permettre de régler la température de cette chambre 2.

Selon la figure 1, la chambre d'évaporation II est constituée par un simple tube chauffé notamment par un serpentin à une température permettant l'évaporation du liquide porteur transformé en aérosol.

Par suite, à la sortie de cette chambre II, on obtient un brouillard idéalement constitué par des micro particules des composés à analyser de diamètre moyen D.

Il est à noter que le filtrage physique préalable des gouttelettes d'aérosol les plus grosses permet de diminuer sensiblement la température de la chambre d'évaporation II, et donc de mettre en évidence des composés plus volatils.

A la sortie de la chambre d'évaporation II, les micro particules des composés à analyser sont transférées dans la chambre de détection III dans laquelle elles sont irradiées selon la flèche F par un rayonnement issu d'une source polychromatique ou monochromatique (laser).

La chambre de détection III est en outre équipée d'un photomultiplicateur ou d'une photodiode permettant la détection de la lumière diffusée par les micro particules des composés à analyser dans une direction schématisée par la flèche G différente de celle du faisceau d'irradiation F.

Lorsque le détecteur évaporatif à diffusion de lumière est couplé à une colonne de chromatographie située en amont, on obtient ainsi un chromatogramme constitué par une succession chronologique de signaux (pics) représentant idéalement chacun un composé du mélange à analyser ; la surface de ces signaux (pics) est fonction de la concentration ou de la masse de chaque composé dans l'échantillon de départ.

D'une manière plus précise, l'intensité I de la lumière diffusée par des micro particules de diamètre D est fonction de la longueur d'onde $\lambda$ de la source d'irradiation selon l'équation :

$$I = f\left(\frac{D}{\lambda}\right)^n$$

Les spécialistes distinguent trois domaines de diffusion de la lumière en fonction des dimensions des micro particules irradiées : le domaine de Rayleigh pour lequel n = 6, le domaine de Mie pour lequel n = 4 et le domaine de réflexion-réfraction pour lequel n = 2.

Ces domaines sont caractérisés par des valeurs du rapport $D/\lambda$ respectivement < 0,1, compris entre 0,1 et 1 et > 1.

Or, le diamètre D des micro particules diffusantes peut être relié au diamètre $D_0$ des gouttelettes de l'aérosol dont elles sont issues par la relation

$$D = D_o\left(\frac{c}{\rho}\right)^{1/3}$$

dans laquelle c et $\rho$ représentent respectivement la concentration et la masse volumique des composés à analyser dissous dans les gouttelettes d'aérosol.

En conséquence, l'intensité I de la lumière diffusée est fonction de la concentration des composés à analyser selon la relation :

$$I = f' \, (c)^{n'}$$

Dans cette relation, n' varie de 2 x 1/3 = 0,66 à 6 x 1/3 = 2 pour les valeurs limites des différents domaines de diffusion.

Par ailleurs, si A représente la surface du signal mesurant l'intensité diffusée par une masse m ou une concentration c (m = V x c , V étant le volume injecté) de l'un des composés à analyser, ces deux valeurs sont reliées par la formule générale : $A = am^b$ ou en d'autres termes Log A = b Logm + Loga.

Le logarithme de la surface du signal mesurant l'intensité diffusée par un composé à analyser est donc une fonction linéaire du logarithme de la masse (ou de la concentration) de ce composé dans l'échantillon.

Pour effectuer une analyse quantitative on trace donc préalablement une droite d'étalonnage et on lit sur celle-ci la masse ou la concentration d'un composé à analyser correspondant à l'intensité de la lumière diffusée par ce composé.

La valeur du coefficient b correspond à la pente de la droite d'étalonnage ou encore au coefficient de réponse du détecteur vis-à-vis de ce composé particulier.

En théorie pour les différents domaines de diffusion susmentionnés, la pente b des droites d'étalonnage a pour valeurs extrêmes 0,66 et 2.

Toutefois, dans la pratique, on observe rarement des pentes inférieures à 1 alors que l'on a déjà observé des pentes supérieures à 2.

Or, la pente b des droites d'étalonnage conditionne dans une large mesure la facilité des dosages ainsi que leur précision et leur fiabilité.

Les spécialistes n'ont pas jusqu'à présent cherché à concevoir des procédés permettant de maîtriser le coefficient de réponse d'un détecteur évaporatif à diffusion de lumière, c'est-à-dire la pente b des droites d'étalonnage.

La présente invention a pour objet de combler cette lacune en proposant un procédé de pilotage d'un détecteur évaporatif à diffusion de lumière permettant de fixer le coefficient de réponse de ce détecteur à une valeur de réglage de nature à faciliter les analyses et / ou à augmenter leur précision et leur fiabilité.

Selon l'invention, on a à cet effet eu l'idée de tenter de maîtriser la pente b des courbes d'étalonnage en jouant sur le rapport $D / \lambda$ entre le diamètre D des particules diffusantes et la longueur d'onde $\lambda$ de la source d'irradiation.

Compte tenu du fait que la longueur d'onde $\lambda$ est fixée par construction (c'est une caractéristique de l'appareil) le seul paramètre sur lequel on cherche à intervenir est le diamètre D des particules diffusantes qui dépend du diamètre Do des gouttelettes de l'aérosol formé dans la chambre de nébulisation.

On peut donc envisager de modifier le diamètre D des particules diffusantes en intervenant sur les conditions de nébulisation.

Par suite, l'invention a pour objet un procédé du type susmentionné caractérisé en ce que l'on règle au moins un paramètre influençant les conditions de nébulisation en amont de la chambre d'évaporation de l'aérosol de façon à fixer le coefficient de réponse b du détecteur évaporatif à diffusion de lumière à une valeur de réglage de nature à faciliter les analyses et / ou à augmenter leur précision et leur fiabilité. La pente b des droites d'étalonnage est déterminée par l'équation :

$$Log\ A = b\ Logm + Loga$$

dans lesquelles A représente la surface du signal mesurant l'intensité diffusée par l'un des composés à analyser et m la masse ou la concentration de ce composé dans l'échantillon.

Selon l'invention, la valeur de réglage peut être soit une valeur voisine de l'unité, soit une valeur aussi grande que possible.

Dans le premier cas, c'est-à-dire lorsque la pente b des droites d'étalonnage est aussi proche que possible de l'unité ou dans l'idéal égale à 1, le signal délivré par le détecteur évaporatif à diffusion de lumière est directement proportionnel à la masse ou à la concentration des composés à analyser.

Il va de soi qu'une telle linéarité directe entre l'intensité du signal délivré par l'appareil et la quantité de composé responsable de ce signal est de nature à faciliter largement les analyses et à augmenter leur précision et leur fiabilité dans un certain nombre de cas.

L'obtention d'une pente b dont la valeur est la plus grande possible est elle aussi particulièrement avantageuse : en effet pour une variation donnée de la concentration d'un composé à analyser l'intensité du signal délivré par l'appareil augmente d'autant plus que la pente b est grande.

Par suite la sensibilité du dosage augmente avec la valeur de la pente b des droites d'étalonnage.

Selon l'invention, le ou les paramètre(s) influençant les conditions de nébulisation peut (peuvent) être choisi (s) dans le groupe formé par la nature du gaz de nébulisation, la température de ce gaz, le débit de ce gaz, la température de la chambre de nébulisation et la composition du liquide porteur.

On a constaté conformément à l'invention que la mise en oeuvre d'hélium en tant que gaz de nébulisation permet d'obtenir, dans certains cas, des coefficients de réponse très proches de 1.

Toutefois, le coût élevé de ce gaz rare ne peut que freiner son utilisation au profit de gaz de nébulisation traditionnels tels que l'azote (gaz inerte) ou l'air qui sont beaucoup moins onéreux.

Selon une autre caractéristique de l'invention, on a constaté que l'on peut obtenir des coefficients de réponse voisins de ceux obtenus avec l'hélium grâce à un ajout contrôlé, à l'air ou à l'azote, d'une certaine proportion d'additif n'ayant pas obligatoirement une volatilité élevée, en particulier de vapeur d'eau ou d'un alcool tel que l'éthanol.

Selon une autre caractéristique de l'invention, on règle parallèlement deux paramètres influençant les conditions de nébulisation.

On a en effet établi que l'on peut ainsi obtenir un effet de synergie facilitant l'obtention d'un coefficient de réponse voisin de 1 ou ayant une valeur maximum.

Selon l'invention, on a en particulier pu constater par ailleurs qu'une modification, même faible, de la composition du liquide porteur, suite à l'addition d'agents modificateurs de nature chimique très diverse avant la nébulisation peut faciliter autant l'obtention d'un coefficient de réponse b voisin de 1 que celle d'un coefficient de réponse b dont la valeur est la plus grande possible.

De tels agents modificateurs peuvent être des solvants organiques ou inorganiques quelconques à des concentrations variables, de préférence volatils.

En effet, un solvant peu volatil crée obligatoirement un bruit de fond complémentaire et oblige à effectuer l'évaporation à plus haute température, ce qui est préjudiciable notamment à la détection des solutés de volatilité moyenne.

Comme il a été indiqué ci-dessus, le procédé conforme à l'invention s'applique d'une manière particulièrement avantageuse au pilotage d'un détecteur évaporatif à diffusion de lumière couplé à une colonne de chromatographie située en amont dans laquelle on met en oeuvre une phase mobile suffisamment volatile pour être directement utilisée en tant que liquide porteur au niveau du détecteur.

On a ainsi pu fixer le coefficient de réponse b du détecteur évaporatif à diffusion de lumière à une valeur de réglage voisine de l'unité ou à une valeur maximum en ajoutant à l'éluant, en amont du détecteur une concentration donnée d'un agent modificateur.

Dans ce contexte, selon une autre caractéristique de l'invention, on peut avantageusement choisir dans une première étape un liquide porteur permettant de fixer le coefficient de réponse du détecteur évaporatif à diffusion de lumière à une valeur de réglage voisine de l'unité ou à une valeur maximum, puis rechercher notamment dans la littérature les conditions d'analyses chromatographiques, en particulier la phase stationnaire, utilisant une phase mobile de la même composition que le liquide porteur.

Il s'agit là d'une démarche inverse de la démarche habituelle conformément à laquelle on choisit préalablement les conditions d'analyse chromatographique et l'on règle ensuite les conditions de nébulisation.

Le caractère particulièrement avantageux du procédé conforme à l'invention, a pu être confirmé par une série d'essais expérimentaux dont les résultats sont répertoriés dans les exemples ci-dessous :

Ces essais ont été effectués en mettant en oeuvre un détecteur évaporatif à diffusion de lumière commercialisé par la Société SEDERE sous l'appellation SEDEX® que l'on a équipé d'un nébuliseur du commerce (nébuliseur NEB 75) de caractéristiques physiques suivantes :

* diamètre interne du tube d'introduction de l'échantillon liquide à analyser 400 micromètres ($\mu$m)
* diamètre de la buse permettant le passage concentrique du gaz de nébulisation 750 micromètres ($\mu$m)

soit pour les dimensions de l'anneau du gaz de nébulisation les valeurs 700 et 750 $\mu$m.

Ce détecteur évaporatif à diffusion de lumière a été monté en aval d'une colonne de chromatographie en phase liquide dont la phase stationnaire était SiC18 et a été mis en oeuvre pour l'analyse de solutés ayant des concentrations inférieures à 250 ppm (250 mg/litre) appartenant à deux familles chimiques distinctes (monosaccharides et triglycérides) nécessitant des phases mobiles de type aqueux et non aqueux.

### Exemple 1

*Etude de la variation du coefficient de réponse d'un détecteur évaporatif à diffusion de lumière avec le débit du gaz de nébulisation (air)*

On a introduit dans le détecteur un liquide porteur constitué par un mélange d'acétonitrile (ACN) et de dichlorométhane ($CH_2Cl_2$) 63-37 avec un débit de 0,7 ml/min.

On a injecté dans la colonne de chromatographie des triglycérides en concentrations variables et on a mesuré les surfaces des signaux de lumière diffusée pour calculer le coefficient de réponse b.

Lors de cet essai, le gaz de nébulisation et la chambre de nébulisation ont été maintenus à température ambiante alors que la chambre d'évaporation a été portée à une température égale à 37°C.

On a obtenu les coefficients de réponse (pente b) suivants :

b = 1,60 pour un débit de gaz de nébulisation de 0,8 l/min
b = 1,52 pour un débit de gaz de nébulisation de 1,2 l/min

Il est à noter qu'un débit du gaz de nébulisation trop faible affecte la régularité de la nébulisation alors qu'un débit trop fort affecte le signal de lumière diffusée qui diminue en intensité et en reproductibilité.

Cet essai a par suite montré que le coefficient de réponse du détecteur évaporatif à diffusion de lumière (pente b) varie peu avec le débit du gaz de nébulisation dans la mesure où les variations mises en oeuvre respectent le bon fonctionnement du nébuliseur, c'est-à-dire garantissent une nébulisation régulière et reproductible.

### Exemple 2

*Variation du coefficient de réponse du détecteur avec la température du gaz de nébulisation (azote) en chromatographie liquide à polarité de phases inversée, c'est-à-dire lorsque la phase mobile est constituée par une solution aqueuse*

On a introduit dans le détecteur un liquide porteur constitué par un mélange d'eau et de 1 % d'ACN avec un débit de 1 ml/min.

On a injecté dans la colonne de chromatographie du glucose en concentrations variables (25 à 100 ppm) et on a mesuré les surfaces des signaux de lumière diffusée pour calculer le coefficient de réponse b.

Lors de cet essai, la chambre de nébulisation a été maintenue à température ambiante tandis que la chambre d'évaporation a été portée à une température de 45°C.

Le gaz de nébulisation a quant à lui successivement été porté à la température ambiante, à 45°C et à 65°C. Les coefficients de réponse (pente b) ainsi obtenus sont rassemblés dans le tableau 1 ci-dessous :

| b | T°amb. | 45°C | 65°C | $\frac{\Delta b_{45\text{-amb}}}{b}$ | $\frac{\Delta b_{65\text{-}45}}{b}$ | $\frac{\Delta b_{65\text{-amb}}}{b}$ |
|---|---|---|---|---|---|---|
| Nébuliseur NEB 75 | 1,59 | 1,31 | 1,26 | - 17,6 % | - 4 % | - 20,7 % |

Cet essai a permis de constater qu'en chromatographie liquide à polarité de phases inversée, le coefficient de réponse du détecteur évaporatif à diffusion de lumière (pente b) diminue quand la température du gaz de nébulisation augmente.

## Exemple 3

*Variation du coefficient de réponse b du détecteur avec la température du gaz de nébulisation (air) en chromatographie liquide en milieu non aqueux*

On a introduit dans le détecteur un liquide porteur (phase mobile) constitué par un mélange ACN - $CH_2Cl_2$ 63 - 37 avec un débit de 0,7 ml/min.
On a injecté dans la colonne de chromatographie des triglycérides en concentrations variables et on a mesuré les surfaces des signaux de lumière diffusée pour calculer le coefficient de réponse b.
Lors de cet essai, la chambre de nébulisation a été maintenue à température ambiante tandis que la chambre d'évaporation a été portée à une température de 37°C.
Le gaz de nébulisation a quant à lui successivement été porté à des températures égales à 15°C, à la température ambiante, à 45°C et à 65°C.
Les coefficients de réponse (pente b) ainsi obtenus sont rassemblés dans le tableau 2 ci-dessous :

| b | 15°C | T°amb. | 45°C | 65°C | $\frac{\Delta b_{45\text{-amb}}}{b}$ | $\frac{\Delta b_{65\text{-}45}}{b}$ | $\frac{\Delta b_{65\text{-}15}}{b}$ |
|---|---|---|---|---|---|---|---|
| Nébuliseur NEB 75 | 1,48 | 1,60 | 1,69 | 1,79 | + 5,3 % | + 5,9 % | 20,9 % |

Cet essai a permis de constater qu'en chromatographie liquide en milieu non aqueux, le coefficient de réponse du détecteur évaporatif à diffusion de lumière (pente b) augmente quand la température du gaz de nébulisation augmente.
Les deux exemples ci-dessus sont de nature à prouver que le coefficient de réponse d'un détecteur évaporatif à diffusion de lumière peut varier avec la température du gaz de nébulisation, que le liquide porteur soit aqueux ou non.
Les variations observées peuvent être opposées, et selon les cas l'utilisation de températures supérieures ou inférieures à l'ambiante peut donc être envisagée pour ramener le coefficient b vers l'unité.

## Exemple 4

*Variation du coefficient de réponse b du détecteur avec la nature et la température du gaz de nébulisation*

Cet essai a été effectué dans les mêmes conditions que l'essai décrit dans l'exemple 2 mais en mettant en oeuvre un détecteur équipé d'un nébuliseur de caractéristiques différentes (prototype), en introduisant dans celui-ci, en tant que gaz de nébulisation soit de l'azote soit de l'hélium, et en portant successivement ce gaz de nébulisation à la température ambiante, à 45°C et à 65°C.
Les résultats obtenus sont rassemblés dans le tableau 3 ci-dessous :

| b | T°amb. | 45°C | 65°C | $\frac{\Delta b_{65\text{-amb}}}{b}$ |
|---|---|---|---|---|
| Azote | 1,56 | 1,44 | 1,42 | -9% |
| Hélium | 0,94 | 0,99 | 0,99 | + 5,3 % |

Cet essai a permis de constater que, dans les conditions expérimentales les plus simples, l'utilisation d'hélium en tant que gaz de nébulisation peut permettre, d'obtenir directement un coefficient de réponse b voisin de l'unité avec le glucose en milieu aqueux.
Comme il a déjà été indiqué, ci-dessus, l'hélium présente toutefois l'inconvénient d'être onéreux ce qui est de nature à limiter son utilisation.
Cet inconvénient a incité à faire varier la composition des gaz de nébulisation traditionnels (air, azote) beaucoup moins onéreux que l'hélium grâce à un ajout contrôlé d'additifs variés tels que de la vapeur d'eau ou de l'éthanol.

Des pentes b voisines de 1,3 à 1,5 avec le nébuliseur NEB 75 ont ainsi pu être ramenées à des valeurs voisines de l'unité en introduisant des vapeurs d'éthanol dans le gaz de nébulisation.

## Exemple 5

*Variation du coefficient de réponse b du détecteur avec la température de la chambre de nébulisation en chromatographie liquide à polarité de phases inversée c'est-à-dire en milieu aqueux.*

Cet essai a été effectué dans les mêmes conditions que l'essai décrit dans l'exemple 2 et en introduisant dans le nébuliseur NEB 75 un gaz de nébulisation maintenu à température ambiante.

Lors de cet essai, la température de la chambre de nébulisation a successivement été portée à 28°C, à 35°C et à 40°C.

Les résultats obtenus sont rassemblés dans le tableau 4 ci-dessous :

| b | 28°C. | 35°C | 40°C | $\frac{\Delta b_{35\text{-}28}}{b}$ | $\frac{\Delta b_{40\text{-}35}}{b}$ | $\frac{\Delta b_{40\text{-}28}}{b}$ |
|---|---|---|---|---|---|---|
| Nébuliseur NEB 75 | 1,62 | 1,49 | 1,22 | - 8 % | - 18,1 % | - 24,7 % |

Cet essai a permis d'établir qu'en chromatographie en milieu aqueux le coefficient de réponse du détecteur (pente b) diminue quand la température de la chambre de nébulisation augmente.

## Exemple 6

*Variation du coefficient de réponse b du détecteur avec la température de la chambre de nébulisation en chromatographie liquide en milieu non aqueux*

Cet essai a été effectué dans les mêmes conditions que l'essai décrit dans l'exemple 3 en introduisant dans le nébuliseur NEB 75 un gaz de nébulisation maintenu à température ambiante.

Lors de cet essai, la température de la chambre de nébulisation a successivement été portée à 15°C, à la température ambiante et à 40°C.

Les résultats obtenus sont rassemblés dans le tableau 5 ci-dessous :

| b | 15°C | T. amb. | 40°C |
|---|---|---|---|
| Nébulisateur NEB 75 | 1,25 | 1,60 | 1,63 |

Cet essai a permis d'établir qu'en chromatographie en milieu non aqueux, le coefficient de réponse du détecteur évaporatif à diffusion de lumière (pente b) augmente lorsque la température de la chambre de nébulisation augmente.

Il est connu des spécialistes dans le domaine de la thermodynamique qu'une nébulisation pneumatique est un phénomène endothermique conduisant à des différences de température du liquide initial et de l'aérosol correspondant.

En conséquence, on observe un refroidissement de l'aérosol qui peut être atténué voire annulé par l'énergie calorifique amenée grâce à un chauffage de la chambre de nébulisation.

Or, ce chauffage fait varier la taille et la distribution en taille des gouttelettes d'aérosol et influence ainsi indirectement la diffusion de la lumière par les micro particules résiduelles des composés à analyser.

Il en résulte des variations du coefficient de réponse (pente b) du détecteur avec la température de la chambre de nébulisation.

On a ainsi établi que si la pente b diminue quand la température augmente en milieu aqueux, c'est l'opposé qui se produit en milieu non aqueux ; on remarque de plus une variation notable de l'intensité diffusée (A ou LogA) quand la température augmente.

Le rendement de la nébulisation changeant avec la température, on a donc simultanément plus de particules qui vont diffuser, mais leur dimension et leur distribution sont modifiées.

**Exemple 7**

*Variation du coefficient de réponse b du détecteur avec les températures du gaz de nébulisation et de la chambre de nébulisation par effet de synergie*

Cet essai a été effectué dans les mêmes conditions que les essais décrits dans les exemples 2 et 3 en introduisant dans un nébuliseur NEB 75 un échantillon liquide constitué soit par un liquide porteur aqueux soit par un liquide porteur non aqueux.

Les solutés utilisés pour calculer b ont toujours été respectivement le glucose et des triglycérides.

Lors de cet essai, on a fait varier la température du gaz de nébulisation (air) et la température de la chambre de nébulisation.

Les résultats obtenus lors de cet essai sont rassemblés dans le tableau 6 ci-dessous :

| Soluté | Nebuliseur | T° gaz | T° ch neb | b* | $b_{max}$** | Δb/b |
|---|---|---|---|---|---|---|
| Glucose | NEB 75 | 45 | 45 | 1,03 | 1,62 | 57 % |
| Triglycérides | NEB 75 | 25 | 15 | 1,25 | 1,81 | 45 % |
| Dans ce tableau : b* correspond à la valeur minimum de la pente b obtenue pour des valeurs de température précisées dans les colonnes précédentes et <br><br> $b_{max}$** correspond à la valeur de la pente b la plus différente de l'unité obtenue pour des températures du gaz et de la chambre de nébulisation différentes de celles précisées dans ce tableau. |||||||

Cet essai a permis d'établir qu'un contrôle simultané de la température du gaz de nébulisation et de la chambre de nébulisation permet d'obtenir par effet de synergie des variations importantes du coefficient de réponse (pente b) du détecteur.

En milieu aqueux, et avec un détecteur équipé du nébuliseur NEB 75, on obtient une pente de 1,03 avec un gaz de nébulisation (azote) porté à 45°C et une chambre de nébulisation portée à 45°C.

Des conditions différentes ont, à l'inverse, conduit à une pente b de 1,62.

En milieu non aqueux avec l'air comme gaz de nébulisation, on n'a pu réduire la pente b qu'à 1,25 alors que des pentes de 1,81 ont pu être observées dans d'autres conditions de températures.

Les résultats susmentionnés démontrent de façon non ambiguë que l'on peut modifier le coefficient de réponse (pente b) d'un détecteur évaporatif à diffusion de lumière pour qu'il devienne voisin de l'unité ou maximum et faciliter les dosages.

L'exemple 4 a mis en évidence plus précisément l'importance des caractéristiques du nébuliseur sans toutefois conclure quant à l'influence prépondérante d'une caractéristique ou d'une autre. Cependant toutes les conclusions restent identiques, l'amplitude des variations de la pente b pouvant cependant changer notablement.

**Exemple 8**

*Variation du coefficient de réponse d'un détecteur évaporatif à diffusion de la lumière par addition d'un solvant organique - influence de la nature de ce solvant.*

On a introduit dans le détecteur un liquide porteur constitué par la phase mobile chromatographique et par un liquide additionnel correspondant à une modification de 5 % de la phase mobile.

Plus précisément dans le cas de l'analyse de triglycerides (TG) on a utilisé une phase mobile chromatographique ACN - $CH_2Cl_2$ 65-35 à un débit de 1 ml/min et divers liquides additionnels à 0,05 ml/min.

On a injecté dans la colonne de chromatographie des concentrations variables (5 à 60 mg/l) de deux triglycerides TG 10 (chaîne carbonée à 10 atomes de carbone) et TG 18 :2 (chaînes carbonées à 18 atomes de carbone et deux doubles liaisons carbone - carbone) comme solutés modèles et on a mesuré les surfaces de lumière diffusée sans addition et avec addition de divers solvants organiques.

Toutes les conditions liées à la nébulisation et à l'évaporation sont fixes pour cette comparaison des valeurs de la pente b.

Les coefficients de réponse b ainsi obtenus sont rassemblés dans le tableau 7 ci-dessous :

| b | O | Méthanol CH$_3$OH | Pentanol CH$_3$(CH$_2$)$_4$OH | Propionitrile CH$_3$CH$_2$C≡N | Nitromethane CH$_3$NO$_2$ |
|---|---|---|---|---|---|
| TG 10 | 1,55 | 1,86 | 1,43 | 1,21 | 1,15 |
| TG 18 :2 | 1,55 | 1,87 | 1,40 | 1,25 | 1,07 |

Cet essai a permis de montrer que la pente b peut augmenter ou diminuer selon la nature de la modification de la composition de la phase mobile chromatographique consécutive à l'ajout d'un liquide additionnel en aval de la colonne.

Cet essai est à rapprocher de l'exemple 4 dans lequel la nébulisation utilise un gaz de nébulisation additionné du modificateur ethanol.

L'addition de nitrométhane rapproche b de l'unité aussi bien pour TG 10 que TG 18 :2. A l'inverse, le méthanol augmente significativement la pente b. Dans ce dernier cas la sensibilité du dosage augmente puisque pour une variation donnée de la concentration d'un TG, le signal augmente d'autant plus que b est grand.

## Exemple 9

*Variation du coefficient de réponse d'un détecteur évaporatif à diffusion de la lumière avec l'ajout d'un modificateur.*

On a introduit dans le détecteur un liquide porteur constitué par une phase mobile chromatographique (ACN-CH$_2$Cl$_2$ 65-35 à 1 ml/min) et par un liquide additionnel contenant un modificateur à 0,05 ml/min

On a injecté dans la colonne de chromatographie les triglycerides TG 10 et TG 18 :2 comme triglycerides modèles à des concentrations variables (5 à 100 mg/l) et on a mesuré les surfaces de lumière diffusée sans et avec addition de modificateur.

Toutes les conditions liées à la nébulisation et à l'évaporation sont fixes pour cette comparaison des valeurs de la pente b.

Les coefficients de réponse b ainsi obtenus sont rassemblés dans le tableau 8 ci-dessous :

| b | 0 | *Urée | ** Cholestérol | ** TEA/HCOOH |
|---|---|---|---|---|
| TG 10 | 1,45 | 1,23 | 0,51 | 1,23 |
| TG 18 :2 | 1,35 | 1,15 | 0,53 | 1,24 |

* l'urée est dissout dans ACN 100 % à une concentration de 110 micromolaires dans le débit total de 1,05 ml/min.

**le cholestérol et le mélange TEA/HCOOH sont en solution dans la phase mobile chromatographique (ACN-CH$_2$Cl$_2$ 65-35) respectivement à des concentrations de 110 micromolaires et 5 millimolaires dans le débit total de 1,05 ml/min.

Cet essai a permis de montrer que la pente b peut fortement diminuer selon la nature chimique de l'additif qui peut former avec un triglycéride soit des liaisons faibles soit des liaisons correspondant à la formation de véritables complexes (cholestérol, urée).

L'augmentation de la taille du soluté sous forme d'agrégat explique en partie d'après la théorie exposée précédemment la diminution de la valeur de la pente b.

## Exemple 10

*Variation du coefficient de réponse d'un détecteur évaporatif à diffusion de la lumière avec l'ajout d'un modificateur en concentration variable*

On a introduit dans le détecteur un liquide porteur constitué par une phase mobile chromatographique ACN-CH$_2$Cl$_2$ 65-35 à un débit de 1 ml/min et par un liquide additionnel à 0,05 ml/min de même composition en ACN-CH$_2$Cl$_2$ 65-35 que la phase mobile mais additionné de cholestérol à des concentrations variables.

On a injecté dans la colonne de chromatographie, à des concentrations variables (5 à 100 mg/l) les triglycérides TG 10 et TG 18 :2 comme triglycérides modèles et on a mesuré les surfaces de lumière diffusée avec les différentes concentrations du modificateur ayant conduit à la plus grande diminution de la pente b dans le tableau précédent 8 (cholestérol) .

Toutes les conditions liées à la nébulisation et à l'évaporation sont fixes pour cette comparaison des valeurs de la pente b.

Les coefficients de réponse b ainsi obtenus sont rassemblés dans le tableau 9 ci-dessous :

| b ╱ concentration | CHOLESTEROL ($10^{-6}$M) | | | | |
|---|---|---|---|---|---|
| | O | * 4 | 13,75 | 55 | 110 |
| TG 10 | 1,45 | 1,27 | 0,91 | 0,67 | 0,51 |
| TG 18 :2 | 1,35 | 1,30 | 0,85 | 0,74 | 0,53 |

\*  gamme de concentration en TG 30 à 100 mg/l.

Cet essai a permis de montrer que la pente b dépend directement de la concentration du modificateur et que la valeur de b égale à 1 peut être obtenue pour une concentration du modificateur (cholestérol) comprise entre 4 et 13,75 micromolaires.

**Revendications**

1. Procédé de pilotage d'un détecteur évaporatif à diffusion de lumière comportant :

   - un nébuliseur associé à une chambre de nébulisation et dans lequel on introduit d'une part un échantillon constitué par un liquide porteur renfermant des composés à analyser moins volatils qui ont été dissous dans celui-ci et d'autre part un gaz de nébulisation permettant de transformer l'échantillon en un aérosol,
   - une chambre d'évaporation constituée par un tube chauffé dans laquelle on évapore le liquide porteur afin de ne conserver que des micro particules des composés à analyser, et
   - une chambre de détection dans laquelle on irradie les micro particules résiduelles des composés à analyser par un rayonnement issu d'une source polychromatique ou monochromatique et on détecte la lumière diffusée dans une direction différente de celle du faisceau d'irradiation,

   **caractérisé en ce que**
   on règle au moins un paramètre influençant les conditions de nébulisation en amont de la chambre d'évaporation de l'aérosol de façon à fixer le coefficient de réponse b du détecteur évaporatif à diffusion de lumière à une valeur de réglage de nature à faciliter les analyses et / ou à augmenter leur précision et leur fiabilité, la pente b des droites d'étalonnage étant déterminée par l'équation :

   $$Log\ A = b\ Logm + Loga$$

   dans lesquelles A représente la surface du signal mesurant l'intensité diffusée par l'un des composés à analyser et m la masse ou la concentration de ce composé dans l'échantillon.

2. Procédé selon la revendication 1,
   **caractérisé en ce que**
   la valeur de réglage est une valeur voisine de l'unité.

3. Procédé selon la revendication 1,
   **caractérisé en ce que**
   la valeur de réglage est la valeur maximale possible.

4. Procédé selon l'une quelconque des revendications 1 à 3,
   **caractérisé en ce que**
   le ou les paramètres influençant les conditions de nébulisation est (sont) choisi(s) dans le groupe formé par la nature du gaz de nébulisation, la température de ce gaz, le débit de ce gaz, la température de la chambre de nébulisation et la composition du liquide porteur.

**5.** Procédé selon la revendication 4,
**caractérisé en ce que**
l'on met en oeuvre de l'hélium en tant que gaz de nébulisation.

**6.** Procédé selon la revendication 4,
**caractérisé en ce que**
l'on met en oeuvre en tant que gaz de nébulisation de l'air ou de l'azote renfermant une certaine proportion d'un additif, en particulier de vapeur d'eau ou d'un alcool tel que l'éthanol.

**7.** Procédé selon l'une quelconque des revendications 1 à 6,
**caractérisé en ce que**
l'on règle parallèlement deux paramètres influençant les conditions de nébulisation de façon à obtenir une synergie.

**8.** Procédé selon l'une quelconque des revendications 1 à 4,
destiné au pilotage d'un détecteur évaporatif à diffusion de lumière couplé à une colonne de chromatographie située en amont dans laquelle on met en oeuvre une phase mobile suffisamment volatile pour être directement utilisée en tant que liquide porteur au niveau du détecteur évaporatif à diffusion de lumière,
**caractérisé en ce que**
l'on ajoute à la phase mobile, en amont du détecteur évaporatif à diffusion de lumière, un agent modificateur, à une concentration choisie de manière à permettre de fixer le coefficient de réponse du détecteur évaporatif à diffusion de lumière à une valeur de réglage voisine de l'unité ou la plus grande possible.

**9.** Procédé selon la revendication 8,
**caractérisé en ce que**
l'on choisit un liquide porteur permettant de fixer le coefficient de réponse du détecteur évaporatif à diffusion de lumière à une valeur de réglage voisine de l'unité ou la plus grande possible, et l'on recherche le système d'analyse chromatographique, en particulier la phase stationnaire adapté à ce liquide porteur et à la séparation recherchée.

Fig. 1

Fig. 2

**Office européen des brevets**

**RAPPORT DE RECHERCHE EUROPEENNE**

Numéro de la demande

EP 02 29 0580

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | TOUSSAINT B ET AL: "Determination of the enantiomers of 3-tert.-butylamino-1,2-propanediol by high-performance liquid chromatography coupled to evaporative light scattering detection" JOURNAL OF CHROMATOGRAPHY, ELSEVIER SCIENCE PUBLISHERS B.V. AMSTERDAM, NL, vol. 890, no. 2, 25 août 2000 (2000-08-25), pages 239-249, XP004228924 ISSN: 0021-9673 * page 240, colonne 2, dernier alinéa * * page 241, colonne 2, alinéa 2 - page 245 * | 1-9 | G01N30/74 |
| A | WILCOX M J ET AL: "A SENSITIVE, FLEXIBLE, DUAL-MODE EVAPORATE LIGHT SCATTERING DETECTOR" AMERICAN LABORATORY, INTERNATIONAL SCIENTIFIC COMMUNICATIONS, SHELTON,, US, vol. 30, no. 17, août 1998 (1998-08), pages 30-32, XP001000047 ISSN: 0044-7749 * abrégé * | 1-9 | |
| A | RIGHEZZA M ET AL: "EFFECTS OF THE NATURE OF THE SOLVENT AND SOLUTES ON THE RESPONSE OF A LIGHT-SCATTERING DETECTOR" JOURNAL OF LIQUID CHROMATOGRAPHY, NEW YORK, NY, US, vol. 11, no. 9/10, 1988, pages 1967-2004, XP002045401 ISSN: 0148-3919 * abrégé * | 1-9 | |

**DOMAINES TECHNIQUES RECHERCHES (Int.Cl.7)**

G01N

-/--

Le présent rapport a été établi pour toutes les revendications

| Lieu de la recherche | Date d'achèvement de la recherche | Examinateur |
|---|---|---|
| LA HAYE | 18 juillet 2002 | Zinngrebe, U |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 1 275 961 A1

## RAPPORT DE RECHERCHE EUROPEENNE

**Office européen des brevets**

Numéro de la demande

EP 02 29 0580

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | TRONES R ET AL: "IMPROVED MODIFICATION OF A LASER LIGHT-SCATTERING DETECTOR FOR USE IN PACKED CAPILLARY HIGH TEMPERATURE LIQUID CHROMATOGRAPHY" JOURNAL OF HIGH RESOLUTION CHROMATOGRAPHY, WILEY VCH, WEINHEIM, DE, vol. 22, no. 5, mai 1999 (1999-05), pages 283-286, XP000834898 ISSN: 0935-6304 * abrégé * | 1-9 | |
| A | HENRY C: "IN THE SPRAY WITH ELSDS. EVAPORATIVE LIGHT SCATTERING FILLS IN THE GAPS LEFT BY OTHER CHROMATOGRAPHIC DETECTORS" ANALYTICAL CHEMISTRY, AMERICAN CHEMICAL SOCIETY. COLUMBUS, US, vol. 69, no. 17, 1 septembre 1997 (1997-09-01), pages 561A-563A, XP000720845 ISSN: 0003-2700 * abrégé * | 1-9 | |
| A | CHARLESWORTH J M: "EVAPORATIVE ANALYZER AS A MASS DETECTOR FOR LIQUID CHROMATOGRAPHY" ANALYTICAL CHEMISTRY, AMERICAN CHEMICAL SOCIETY. COLUMBUS, US, vol. 50, no. 11, 1 septembre 1978 (1978-09-01), pages 1414-1420, XP000199513 ISSN: 0003-2700 * abrégé * | 1-5 | |

DOMAINES TECHNIQUES RECHERCHES (Int.Cl.7)

Le présent rapport a été établi pour toutes les revendications

| Lieu de la recherche | Date d'achèvement de la recherche | Examinateur |
|---|---|---|
| LA HAYE | 18 juillet 2002 | Zinngrebe, U |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

14